# EUROPÄISCHE PATENTSCHRIFT

(11) **EP 0 405 218 B1**
(45) Veröffentlichungstag und Bekanntmachung des Hinweises auf die Patenterteilung: **21.09.1994**
(21) Anmeldenummer: 90111045.2
(22) Anmeldetag: 12.06.1990
(51) Int. Cl.: B65G 15/52, A01D 17/10

(54) **Verfahren zur Herstellung von Förderbändern mit starren Mitnehmern**
Method for fabrication of conveyor belts with rigid driver rods
Procédé pour la fabrication de courroies de transport avec tocs entraîneurs rigides

(30) Priorität: 30.06.1989 DE 3921518
(43) Veröffentlichungstag der Anmeldung: 02.01.1991
(73) Patentinhaber: Jäger, Arnold, D-31303 Burgdorf (DE)
(72) Erfinder: Jäger, Arnold, D-31303 Burgdorf (DE); Jäger, Claudius, D-31303 Burgdorf (DE)
(74) Vertreter: Depmeyer, Lothar

(56) Entgegenhaltungen:
- EP-A- 0 212 146
- EP-A- 0 229 213
- DE-A- 2 535 903
- DE-B- 1 178 360
- FR-A- 2 294 107

## Beschreibung

Die Erfindung betrifft ein Verfahren zur Herstellung von Förderbändern mit unter einer elastisch verformbaren Deckschicht befindlichen Verstärkungseinlagen und starren Mitnehmern, die auf der Deckschicht aufliegen und durch sie übergreifende und am Förderband befestigte Befestigungsglieder gehalten sind. Insb. geht die Erfindung von Befestigungsgliedern aus, die aus Schellen mit eingeschossenen Krampen bestehen. Die Erfindung ist. für Stabbänder an Stabbandförderern bei landwirtschaftlichen Maschinen geeignet.

Die Erfindung betrifft ferner ein durch das Verfahren erhältliches Förderband.

Nach dem bekannten Stand der Technik werden zur Herstellung der vorerwähnten Förderbänder zunächst die Mitnehmer bzw. die erwähnten Stäbe auf die Förderbänder aufgelegt. Alsdann werden die Befestigungsglieder durch Einschiessen der Krampen od. dgl. angebracht. Eine solche Herstellung setzt maschinelle Einrichtungen voraus, um die Befestigungsglieder vorschriftsmässig anbringen zu können. Reparaturen und Montagen an Ort und Stelle - z.B. während des Arbeitens auf dem Acker - sind daher ausgeschlossen.

Der Erfindung liegt die Aufgabe zugrunde, ein Verfahren aufzuzeigen, das die Anbringung und Montage der Mitnehmer auf den Förderbändern wesentlich erleichtert, um so diese Arbeitsgänge auch nicht fabrikmässig, also von weniger Geübten ausführen lassen zu können.

Zur Lösung dieser Aufgabe werden erfindungsgemäss zunächst die Befestigungsglieder mit dem Förderband verbunden und dann die Mitnehmer unter elastischer Verformung der Deckschicht zwischen Förderband und Befestigungsglied eingeschoben.

Die Anbringung der Befestigungsglieder z.B. der Krampen erfolgt somit zunächst unabhängig von dem Mitnehmern; erst wenn die Befestigungsglieder sich an Ort und Stelle befinden, werden die Mitnehmer durch Einschieben unter die Befestigungsglieder unter Verformung der Deckschicht des Förderbandes angebracht. Die Herstellung der Förderbänder kann somit meterweise erfolgen; die Anbringung der Mitnehmer erfolgt dann an abgelängten Förderbandabschnitten in einfacher Weise durch Eintreiben. Dies kann an beliebiger Stelle geschehen. Schwierigkeiten sind ausgeschlossen, weil die Teilungen und Abstände der Mitnehmer durch die vorgefertigten Förderbänder mit den schon darauf befindlichen Befestigungsgliedern bereits festliegen.

Diese Vorgänge sind sowohl für die Neuherstellung als auch für die Reparatur der genannten Förderbänder bedeutungsvoll.

Weitere Einzelheiten der Erfindung werden anhand der Zeichnung erläutert, in der ein Ausführungsbeispiel wiedergegeben ist. Es zeigen .
- Fig. 1: ein Stabband für einen Stabbandförderer an einer landwirtschaftlichen Maschine, und zwar einen Längenabschnitt des normalerweise endlosen, umlaufenden Bandkörpers,
- Fig. 2: einen Teillängsschnitt durch ein seitliches Förderband des Stabbandes gemäss Fig. 1, und zwar einem Schnitt nach der Linie II - II von Fig. 1 - allerdings im noch nicht fertiggestellten Zustand eines Förderbandes,
- Fig. 3: ist ein Schnitt nach der Linie III - III von Fig. 2,
- Fig. 4: ist eine Draufsicht auf eine Befestigungsstelle eines Mitnehmers an einem Längenabschnitt eines Bandkörpers, und zwar im montierten Zustand eines Mitnehmers,
- Fig. 5: einen Schnitt nach der Linie V - V von Fig. 4 und
- Fig. 6: einen Querschnitt durch ein seitliches Förderband mit abgewandelter Befestgungsstelle für ein Stabende.

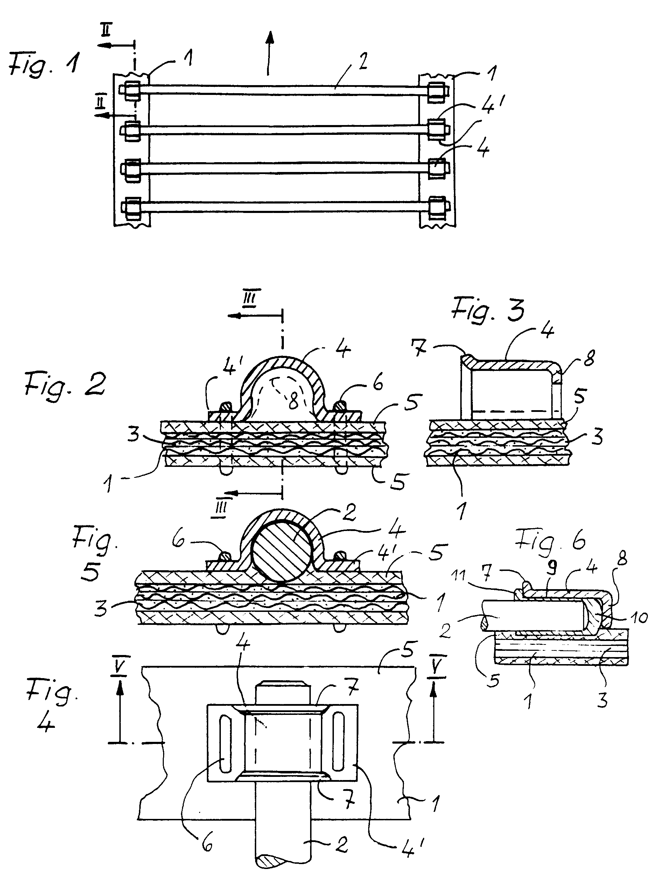

Das Stabband gemäss Fig. 1 besteht aus zwei am Rand des umlaufenden Stabbandes angeordneten Förderbändern 1, die durch einander parallele, steife, quer verlegte Stäbe 2 aus Stahl miteinander verbunden sind. Diese Stäbe 2 dienen der Förderung, aber auch der Siebung von Kartoffeln, Rüben od. dgl.

Die beiden endlosen Förderbänder 1 haben einen zugfesten Kern 3 in Form eines Gewebepaketes und eine obere Deckschicht 5 und eine untere Deckschicht 5 aus Gummi. Im übrigen ist auch der Kern 3 von Gummi durchsetzt; alle Bestandteile des Förderbandes 1 sind festhaftend und innig über den Gummi zusammengefügt.

Die Befestigung der Stäbe 2 an den Förderbändern 1 erfolgt duch übergreifende Schellen 4, deren abgewinkelte Enden 4′ auf der Deckschicht 5 aufliegen. Die Enden 4′ sind durch eingeschossene, ohne Materialwegnahme eingetriebene Krampen 6 am Bandkörper gehalten. Die Krampen 6 durchsetzen dabei die Enden 4′ und auch den Körper der Förderbänder 1 und können auf der gegenüberliegenden Bandseite abgebogen oder geringfügig zurückgebogen sein, um ein Herausrutschen der Krampen 6 auszuschliessen.

Wichtig ist nun, dass zunächst gemäss Fig. 2 die Schellen 4 in vorgenannter Weise befestigt werden, und zwar so, dass ein grössererer Längenabschnitt der Förderbänder 1 entsteht, der teilungsgenau mit den Schellen 4 ausgestattet ist. Die gewöhnlich endlich hergestellten Förderbänder 1 können nunmehr endlos zusammengeschlossen werden. Alsdann werden die Stäbe 2 zwischen Schelle 4 und oberer Deckschicht 5 durch eine Längsbewegung eingetrieben, und zwar unter elastischer Verformung des unter der Schelle 4 befindlichen Gummis der Deckschicht 5. Dies geschieht vorzugsweise so, dass der durch das Eintreiben der Stäbe 2 verformte Gummi alle freien Räume zwischen Schelle 4 und dem Förderband 1 ausgefüllt werden. In den Gummi wird dabei eine beträchtliche Spannung eingeleitet, die die Stabenden sicher hält.

Ist ein Förderband 1 beschädigt, so kann es von seinen Stäben 2 durch Herausziehen dieser Stäbe befreit werden. Nach dem Auswechseln des Förderbandes werden die Stabenden wieder eingetrieben, um so ein wieder voll einsatzfähiges Stabband zu schaffen. Dies trifft nicht nur für ganze Förderbänder 1, sondern auch für Längenabschnitte dieser Bänder zu, die dann mit den verbleibenden Abschnitten durch geeignete Verbinder zu vereinigen wären.

Um das Eintreiben der Stäbe 2 zu erleichtern, können die Ränder 7 der Schellen 4 nach aussen abgebogen oder abgewinkelt sein. Ggfs. ist auch eine Rundung oder Schrägung an den Stabenden angebracht. Die Massnahmen an den Rändern der Schellen 4 sind jedoch vorzuziehen, weil die Schellen 4 Stanzerzeugnisse sind und daher schon von vorneherein mit den Abwinkelungen oder Abbiegungen versehen werden können.

Das erfindungsgemässe Verfahren wird vorzugsweise bei den erwähnten Stabbändern angewandt. jedoch kann es auch bei anderen, an der Oberseite elastisch nachgiebigen Förderbändern benutzt werden, die mit Mitnehmern z.B. Haken, Bechern od. dgl. versehen werden müssen. Sinngemäss kann die Erfindung auch bei Einzelförderbändern benutzt werden.

Bei der Ausführung gemäss Fig. 3 ist die Schelle 4 seitlich aussen am Stabband nach innen in Richtung auf das Förderband 1 abgewinkelt. Der abgewinkelte Rand ist mit 8 bezeichnet; er hat eine Begrenzerfunktion beim Einführen eines Stabes 2 in die Schelle 4. Die Stäbe 2 werden demgemäss stets bis zum Anschlag ( Rand 8 ) eingeführt, um so genaue gegenseitige Abstände der beiden Förderbänder 1 und schlechthin eine genauere Lage der Einzelzteile zueinander zu gewährleisten. Zudem wird die Stellung der Stäbe 2 abgesichert.

Um die Haftreibung zwischen den Stabenden und dem Förderband 1 bzw. Schellen 4 zu erhöhen, kann gemäss Fig. 6 eine die Stabenden eng umschliessende Buchse 9 aus einem Elastomer ( Gummi ) vorgesehen werden, die auch kappenartig mit einer Querwandung 1o ausgestattet sein kann, die den Stirnflächen der Stabenden benachbart liegt und das Einführen der Stäbe 2 erleichtert und ein Abrutschen der Buchse 9 verhindert. Auch hier ist ein weit herunterreichender Rand 8 vorgesehen, der als Endanschlag dient.

Der Ordnung halber sei noch darauf hingewiesen, dass gemäss Fig. 4 beide Ränder der Schelle 4 nach oben abgewinkelt sind, um eine Lageunabhägigkeit zu schaffen. Die bessere Ausbildung ist jedoch in den Fig. 2 und 3 dargestellt, da hier auch Endanschläge vorgesehen sind.

## Patentansprüche

1. Verfahren zur Herstellung von Förderbändern mit unter einer elastischen Deckschicht (5) befindlichen Verstärkungseinlagen (3) und starren Mitnehmern (2), die auf der Deckschicht (3) des Förderbandes (1) aufliegen und durch sie übergreifende, am Förderband (1) befestigte Befestigungsglieder (4) gehalten sind, dadurch gekennzeichnet, daß zunächst die Befestigungsglieder (4) mit dem Förderband (1) verbunden und dann die Mitnehmer (2) unter elastischer Verformung der Deckschicht (5) zwischen Förderband (1) und Befestigungsglied (4) eingeschoben werden.

2. Verfahren nach Anspruch 1 zur Herstellung von Stabbändern für Stabbandförderer an landwirtschaftlichen Maschinen.

3. Vefahren nach Anspruch 1, dadurch gekennzeichnet, daß zunächst ein größerer Längenabschmitt der Förderbänder (1) mit den Befestigungsgliedern (4) gefertigt und dann Abschnitte davon mit Mitnehmern (2) versehen werden.

4. Förderband erhältlich durch das Verfahren gemäß Anspruch 1, dadurch gekennzeichnet, daß die Ränder (7) der übergreifenden Befestigungsglieder (4) in eine dem Förderband (1) abgekehrte Richtung abgebogen oder abgewinkelt sind.

5. Förderband erhältlich durch das Verfahren gemäß Anspruch 1, dadurch gekennzeichnet, daß die beim Stabband außen liegenden Ränder (8) der Befestigungsglieder (4) nach innen in Richtung auf das Förderband (1) abgewinkelt oder abgebogen sind und zwar in der Weise, daß die so gebildete Abwinkelung oder Abbiegung beim Einschieben der Mitnehmer (2) einen Endanschlag bildet.

6. Förderband erhältlich durch das Verfahren gemäß Anspruch 1, dadurch gekennzeichnet, daß zwischen dem Förderband (1) und dem Befestigungsglied (4) einerseits und den Stabenden andererseits eine Buchse (9) aus einem Elastomer (Gummi) vorgesehen ist, die radial vorgespannt ist.

7. Förderband nach Anspruch 6, dadurch gekennzeichnet, daß die Buchse (9) Bestandteil einer Kappe ist, deren Querwand (10) den Stirnflächen der Stäbe (2) benachbart liegt.

8. Förderband nach Anspruch 6, dadurch gekennzeichnet, daß die Buchse (9) die Stabenden eng umscshließt.

9. Förderband nach Anspruch 6, dadurch gekennzeichnet, daß das den Stirnflächen der Stabenden abgekehrte Ende der Buchse (9) wulstartig (bei 11) verdickt ist.

## Claims

1. Method of producing conveyor belts having reinforcing inserts (3), which are situated beneath a resilient cover layer (5), and rigid carriers (2), which lie on the cover layer (5) of the conveyor belt (1) and are retained by securing members (4), which overlap said carriers and are mounted on the conveyor belt (1), characterised in that initially the securing members (4) are connected to the conveyor belt (1), and then the carriers (2) are inserted between conveyor belt (1) and securing member (4) with the resilient deformation of the cover layer (5).

2. Method, according to claim 1, of producing barred belts for barred belt conveyors for use with agricultural machines.

3. Method according to claim 1, characterised in that initially a relatively large longitudinal portion of the conveyor belts (1) is produced with the securing members (4), and then portions thereof are provided with carriers (2).

4. Conveyor belt, which can be obtained by the method according to claim 1, characterised in that the edges (7) of the overlapping securing members (4) are curved or bent-over into a direction facing away from the conveyor belt (1).

5. Conveyor belt, which can be obtained by the method according to claim 1, characterised in that the edges (8) of the securing members (4) situated externally of the barred belt are bent-over or curved inwardly in a direction towards the conveyor belt (1) in such a manner that the bent-over or curved portion thus formed forms an end stop for when the carriers (2) are inserted.

6. Conveyor belt, which can be obtained by the method according to claim 1, characterised in that a bush (9), formed from an elastomeric material (rubber) and radially initially tensioned, is provided between the conveyor belt (1) and the securing member (4), on the one hand, and the bar ends, on the other hand.

7. Conveyor belt according to claim 6, characterised in that the bush (9) is a component part of a cap, the transverse wall (10) of which lies adjacent to the end faces of the bars (2).

8. Conveyor belt according to claim 6, characterised in that the bush (9) closely surrounds the bar ends.

9. Conveyor belt according to claim 6, characterised in that the end of the bush (9), remote from the end faces of the bar ends, is thickened in a bead-like manner (at 11).

## Revendications

1. Procédé pour fabriquer des bandes convoyeuses comportant des inserts de renforcement (3) situés au-dessous d'une couche de revêtement élastique (5), et des organes d'entraînement rigides (2), qui s'appliquent sur la couche de revêtement (3) de la bande convoyeuse (1) et sont maintenus par des organes de fixation (4) qui s'engagent par-dessus les inserts et sont fixés à la bande convoyeuse (1), caractérisé par le fait qu'on relie tout d'abord les éléments de fixation (4) à la bande convoyeuse (1) et qu'ensuite on insère les organes d'entraînement (2), moyennant une déformation élastique de la couche de revêtement (5), entre la bande convoyeuse (1) et l'élément de fixation (4).

2. Procédé suivant la revendication 1 pour la fabrication de bandes à barreaux pour des transporteurs à barreaux dans des machines agricoles.

3. Procédé suivant la revendication 1, caractérisé par le fait qu'on fabrique tout d'abord une section de longueur assez importante des bandes convoyeuses (1) en les équipant des éléments de fixation (4) et qu'ensuite on équipe des parties de ces bandes avec des organes d'entraînement (2).

4. Bande convoyeuse pouvant être obtenue à l'aide du procédé suivant la revendication 1, caractérisée en ce que les bords (7) des éléments de fixation enveloppants (4) sont repliés ou coudés dans une direction s'écartant de la bande convoyeuse (20).

5. Bande convoyeuse pouvant être obtenue à l'aide du procédé suivant la revendication 1, caractérisée par le fait que les bords (8), qui sont situés sur le côté extérieur dans la bande à barreaux, des éléments de fixation (4) sont repliés ou coudés vers l'intérieur en direction de la bande convoyeuse (1) et ce de telle sorte que la partie coudée ou repliée ainsi formée constitue une butée d'extrémité, lors de l'insertion des organes d'entraînement (2).

6. Bande convoyeuse pouvant être obtenue à l'aide du procédé suivant la revendication 1, caractérisée par le fait qu'entre la bande convoyeuse (1) et l'élément de fixation (4), d'une part, et les extrémités des barreaux, d'autre part, est prévu un manchon (9) formé d'un élastomère (caoutchouc) qui est précontraint radialement.

7. Bande convoyeuse pouvant être obtenue à l'aide du procédé suivant la revendication 6, caractérisé par le fait que le manchon (9) fait partie d'un capuchon, dont la paroi transversale (10) est située au voisinage des surfaces frontales des barreaux (2).

8. Bande convoyeuse pouvant être obtenue à l'aide du procédé suivant la revendication 6, caractérisée par le fait que le manchon (9) entoure étroitement les extrémités des barreaux.

9. Bande convoyeuse pouvant être obtenue à l'aide du procédé suivant la revendication 6, caractérisée par le fait que l'extrémité du manchon (9), tournée à l'opposé des surfaces frontales des extrémités des barreaux, est épaisse en formant un rebord (en 11).
